# EUROPEAN PATENT APPLICATION

(11) **EP 2 727 831 A1**
(43) Date of publication of application: **07.05.2014**
(21) Application number: 12190657.2
(22) Date of filing: 30.10.2012
(51) Int. Cl.: B64C 13/42, B64D 41/00

(54) **Method for transferring hydraulic power between two hydraulic systems in an aircraft, use of a power control unit and drive system in an aircraft**

(71) Applicant: Airbus Operations GmbH, 21129 Hamburg (DE)
(72) Inventor: Fleddermann, Andreas, 28357 Bremen (DE); Winkelmann, Christoph, 21244 Buchholz (DE); Hoffmann, Lars, 28816 Stuhr (DE)
(74) Representative: Maiwald Patentanwalts GmbH

(57) **Abstract**

A method for transferring hydraulic power between at least two hydraulic systems (54, 55) in an aircraft (2), the aircraft (2) having a drive system (4) comprising at least one mechanical transmission (10, 14, 44, 46) connected to a power control unit (22, 24), the power control unit (22, 24) having a first hydraulic displacement machine (34) connected to a first hydraulic system (54) and a second hydraulic displacement machine (36) connected to a second hydraulic system (55), comprises the steps of connecting both hydraulic displacement machines (34, 36) to a differential gear unit (28) having a common mechanical output (52), arresting the common mechanical output (52), operating the first hydraulic displacement machine (34, 36) in a motor mode under consumption of hydraulic power of the first hydraulic system (54) such that the second hydraulic displacement machine (34, 36) is mechanically rotated in a pump mode and supplies hydraulic power to the second hydraulic system (55). Thereby a power transfer between two hydraulic systems may be conducted without installing a dedicated power transfer unit (PTU) and under use of a power control unit (PCU) for driving high lift devices.

## Description

### TECHNICAL FIELD

The invention relates to a method for transferring hydraulic power between two hydraulic systems in an aircraft, the aircraft having a drive system comprising at least one mechanical transmission connected to a power control unit, the use of a power control unit and a drive system comprising at least one mechanical transmission connected to a power control unit.

### BACKGROUND OF THE INVENTION

In an aircraft, hydraulic power is usually generated by engine driven hydraulic pumps connected to two or more hydraulic systems, which are separate from each other due to redundancy reasons. It is furthermore known to transfer hydraulic power from one of the separate hydraulic systems to another one by means of a so-called power transfer unit (in the following also referred to as "PTU"). A PTU is used when one of the hydraulic systems lacks hydraulic pressure. Usually a PTU is realized by two mechanically coupled hydraulic displacement machines, i.e. one in each of the separate hydraulic systems. For transferring power, one of the hydraulic displacement machines is actively operated under consumption of hydraulic power of the hydraulic system to which it is connected, wherein the other hydraulic displacement machine is mechanically driven and thereby generates hydraulic pressure in the other hydraulic system to which it is connected. The hydraulic systems are completely independent from each other as the occupied hydraulic fluids do not intermix within the separate hydraulic systems during the operation of the PTU.

Main hydraulic loads in an aircraft may be hydraulic actuators connected to control surfaces such as ailerons, elevons and rudders, as well as landing gear actuators and cargo door actuators. During start and landing phases of the aircraft, high lift systems are commonly used for increasing the lift coefficient of the aircraft. Often, high lift systems of commercial and military aircraft are powered by a mechanical drive system having a central power control unit (PCU), which PCU drives transmission shafts extending into the wings of the aircraft. These transmission shafts are mechanically coupled to drive stations distributed along the trailing and/or leading edge of the respective wing, which drive stations are coupled to the control surfaces to be moved. Such a PCU may include at least one hydraulic motor.

### SUMMARY OF THE INVENTION

Each hydraulic displacement machine installed in the aircraft for providing hydraulic and/or mechanical power for a special purpose increases the total weight of the aircraft, even if the totally providable hydraulic and/or mechanical power is seldomly used.

It may therefore be considered an object of the invention to provide a method and a system for transferring hydraulic power between two separate hydraulic systems in an aircraft with a sufficient reliability and reducing the resulting weight at the same time.

The object concerning the method is met by a method for transferring hydraulic power between two hydraulic systems in an aircraft according to the features of independent claim 1. Advantageous embodiments and improvements may be gathered from the sub-claims and the following description.

A method for transferring hydraulic power between at least two hydraulic systems in an aircraft is proposed, the aircraft having a drive system comprising at least one mechanical transmission connected to a power control unit, the power control unit having a first hydraulic displacement machine connected to a first one of the at least two hydraulic systems and a second hydraulic displacement machine connected to a second one of the at least two hydraulic systems, the method comprising the steps of: connecting both hydraulic displacement machines to a differential gear unit having a common mechanical output, arresting the mechanical output and operating the first hydraulic displacement machine in a motor mode under consumption of hydraulic power from the first hydraulic system such that the second hydraulic displacement machine is mechanically rotated in a pump mode for supplying hydraulic power to the second hydraulic system.

PCUs may comprise two independent motors to provide a certain redundancy in driving the connected mechanical transmission. The mechanical transmission may thereby be realized by a transmission shaft or a series of connected transmission shafts forming a transmission shaft system. It is not uncommon to equip PCUs with two hydraulic motors, while in modem hybrid PCUs an electric motor and a hydraulic motor may also be included. According to the invention, the PCU comprises a first hydraulic displacement machine and a second hydraulic displacement machine, which both may act as a hydraulic motor (motor mode) and as a hydraulic pump (pump mode). In a common design main shafts of both hydraulic displacement machines are connected to a speed summing differential gear that has a mechanical output driven by the two hydraulic displacement machines. The differential gear may therefore comprise two mechanical inputs, which may especially be realized by means of input shafts. The mechanical output of the differential gear unit may also especially be realized by means of an output shaft. Between each hydraulic displacement machine and a respective mechanical input of the differential gear unit a brake may be situated, which brake is released only when the respective hydraulic displacement machine is operated. Therefore, the mechanical output of the differential gear unit is driven either by one of the two hydraulic displacement machine alone or by the two hydraulic displacement machines at the same time.

The PCU is usually positioned in the fuselage of the aircraft and is electrically connected to a computerized control, e.g. to two independent slat flap control computers (SFCC) for controlling and monitoring the drive system. The mechanical output of the PCU is further mechanically connected to a mechanical transmission extending into the wings of the aircraft. The mechanical transmission thereby provides mechanical power to geared actuators at flap or slat panel drive stations distributed within the wings, e.g. by means of one or more transmission shafts.

The hydraulic displacement machines may be realized by any suitable fluidic machine that allows an operation in a pump mode and a motor mode. A motor mode is necessary for operating the hydraulic displacement machine as a motor for driving the respective mechanical input of the differential gear unit. Each hydraulic displacement machine may comprise a means for switching the operation mode from a pump mode into a motor mode or vice versa, e.g. by means of a set of non-return valves allowing the supply of pressurized hydraulic fluid to the respective hydraulic displacement machine without flowing back into the associated hydraulic system and vice versa. Preferably the hydraulic displacement machine is an axial piston machine with a plurality of movably supported pistons controlled by a swivable swash plate, wherein the swash plate may be moved in two different directions over a center position. This allows to vary the displacement of the pistons as well as the flow direction.

In the method according to the invention it is assumed that the mechanical transmission is momentarily not rotated, i.e. when the high lift system is in a standby state. Thereby the mechanical output of the differential gear is arrested, e.g. by means of a brake. Consequently, the two mechanical inputs of the differential gear are directly coupled such that a rotation of one of the mechanical inputs leads to the rotation of the other input shaft, usually in an opposite direction. Once the mechanical output is arrested, the second hydraulic displacement machine may be rotated by the first displacement machine. As a result, excess hydraulic power in the first hydraulic system may be consumed by the first hydraulic displacement machine in a motor mode for supplying hydraulic power to the second hydraulic system through the associated second hydraulic displacement machine in pump mode.

As the power control unit for driving slats and flaps of an aircraft is usually only operated during takeoff and landing phases, the PCU is not providing any function in a major part of a flight mission. By combining the function of transferring hydraulic power by means of components of the PCU in those time intervals that do not include any movement of slats, flaps or other PCU-driven high lift devices, an important function may be provided without the necessity of installing and operating a dedicated PTU. As already present components are used a clear weight advantage is achieved.

In a further embodiment, arresting the mechanical output comprises arresting at least one first brake connected to the at least one mechanical transmission. By arresting the mechanical transmission the mechanical output is arrested as the mechanical transmission is directly coupled to the mechanical output. The at least one first brake may be an already present brake of the mechanical transmission or an additionally integrated brake.

In another advantageous embodiment, the at least one first brake is at least one wing tip brake. In common drive systems with a PCU and a mechanical transmission in the form of a transmission shaft system a wing tip brake (WTB) in each wing is mechanically connected to the transmission shaft and the wing structure for arresting and holding a respective transmission shaft in failure cases. By activating the wing tip brakes, the mechanical transmission is arrested and therefore the mechanical output of the differential gear unit, which is mechanically connected to the mechanical transmission, is arrested, too. Hence, without the necessity of any additional components the advantages of the invention can be achieved.

In another embodiment of the method operating the first hydraulic displacement machine in a motor mode includes releasing a second brake at the first hydraulic machine and a third brake at the second hydraulic displacement machine. These brakes may primarily be used for preventing the slip of one of the mechanical inputs of the differential gear unit when exclusively the other mechanical inputs is driven by one of the hydraulic displacement machines. In a common drive system, these brakes may automatically be activated when the respective hydraulic displacement machine is not driven. The second and third brakes may thereby be realized as pressure-off brakes and may be released once the respective first and/or second hydraulic displacement is pressurized.

In case the hydraulic pressure of the hydraulic system to which the hydraulic power is to be transferred is in a range of zero, e.g. due to a complete lack of hydraulic pressure supply to the respective hydraulic system, at least one of the second and third brake may be adapted to be released actively, for example by a brake release unit. The brake release unit may be capable of applying a hydraulic pressure from either the other hydraulic system or by means of an actuator, that is realized as a brake release actuator or any other means.

In a still further embodiment a control unit controls the displacement of the first and second hydraulic displacement machine for adjusting a resulting transferred hydraulic pressure or flow rate. In a first control method the pressure in the hydraulic system that is receiving hydraulic power is controlled by adjusting the displacement of the actively operated hydraulic displacement machine, e.g. by adjusting the respective swash plate. In a second control method the displacement of the actively operated hydraulic displacement machine is fixed, e.g. to a maximum value, wherein the flow rate is controlled by a continuous adjustment of the displacement of the passively driven hydraulic displacement machine.

The invention further relates to the use of a PCU comprising a first hydraulic displacement machine and a second hydraulic displacement machine connected to a differential gear unit having a common mechanical output for transferring hydraulic power from the first hydraulic system to the second hydraulic system under arresting the common mechanical output of the differential gear.

In a further advantageous embodiment at least one wing tip brake connected to a mechanical transmission is mechanically connected to the mechanical output of the differential gear unit. Under arresting the mechanical transmission the common mechanical output is arrested.

The invention further relates to a drive system for moving at least one control surface of an aircraft and for transferring hydraulic power between at least two hydraulic systems in an aircraft. The drive system comprises at least one mechanical transmission connected to a power control unit, the power control unit having a first hydraulic displacement machine connected to a first hydraulic system and a second hydraulic displacement machine connected to a second hydraulic system, wherein the first and second hydraulic displacement machines are coupled to a differential gear unit having a common mechanical output, wherein the drive system is adapted for arresting the mechanical output such that by operating the first hydraulic displacement machine in a motor mode under consumption of hydraulic power from the first hydraulic system the second hydraulic displacement machine is mechanically rotated via the differential gear unit in a pump mode and supplies hydraulic power to the second hydraulic system.

An advantageous embodiment comprises at least one first brake connected to the at least one mechanical transmission. As stated above, this allows to arrest the common mechanical output connected to the mechanical transmission.

In an advantageous embodiment, the at least one first brake may be realized by at least one wing tip brake. This brake may already be present in the aircraft that makes use of the invention. Therefore, the installation of dedicated parts is not necessary.

In order to allow the operation of one of the first and second hydraulic displacement machines alone the drive system may comprise a second brake connected to the first hydraulic displacement machine for arresting the first hydraulic displacement machine and a third brake connected to the second hydraulic displacement machine for arresting the second hydraulic displacement machine. According to an advantageous embodiment at least one of the second and third brakes may be realized by means of a pressure-off brake. These brakes may already be present in a commonly used PCU, too.

### BRIEF DESCRIPTION OF THE DRAWINGS

Further characteristics, advantages and application options of the present invention are disclosed in the following description of the exemplary embodiments in the figures. All the described and/or illustrated characteristics per se and in any combination form the subject of the invention, irrespective of their composition in the individual claims or their interrelationships. Furthermore, identical or similar components in the figures have the same reference characters.
Fig. 1 shows a general overview of an aircraft with a drive system for driving control surfaces.
Fig. 2 shows a part of the drive system in a schematic view.
Fig. 3 shows a simplified block-oriented schematic view of the part of the drive system shown in Fig. 2 in a first mode of operation.
Fig. 4 shows a hydraulic system coupled with a part of the drive system in a schematic view in a first mode of operation.
Fig. 5 shows a simplified block-oriented schematic view of the part of the drive system shown in Fig. 2 in a second mode of operation
Fig. 6 shows a hydraulic system coupled with a part of the drive system in a schematic view in a second mode of operation

### DETAILED DESCRIPTION OF EXEMPLARY EMBODIMENTS

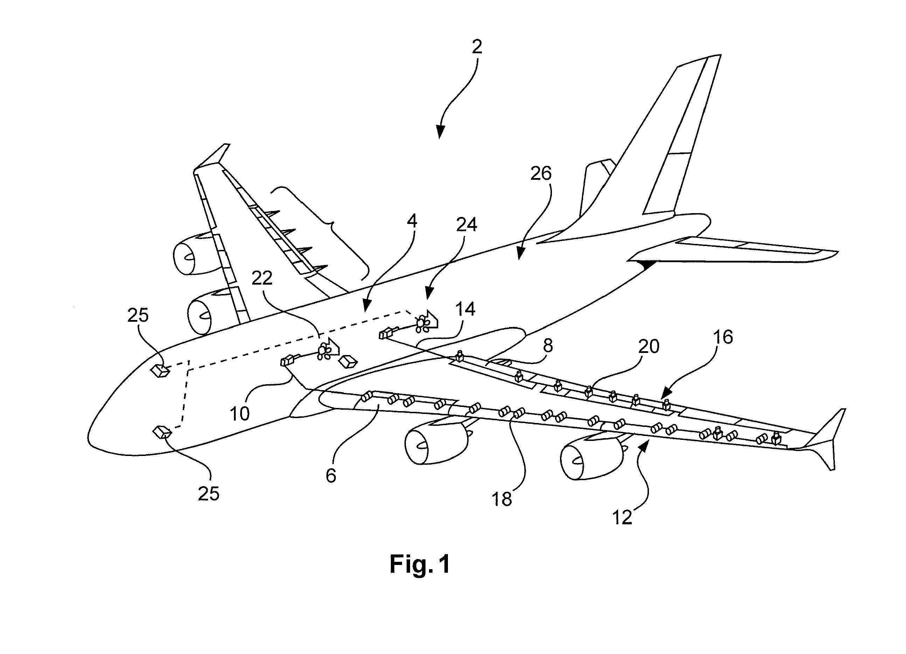

Fig. 1 shows a general overview of an aircraft 2 having a drive system 4 for driving control surfaces 6 (leading edge slats) and 8 (trailing edge flaps). The drive system 4 comprises a first transmission shaft 10 as a first mechanical transmission located at a wing leading edge 12 as well as a second transmission shaft 14 as a second mechanical transmission located at a wing trailing edge 16. Several drive stations 18 and 20 are distributed along the leading edge 12 and the trailing edge 16, respectively. The drive stations 18 and 20 are designed for converting rotary power into a translational movement of the control surfaces 6 and 8.

The transmission shaft 10 and 14 are driven by drive units 22 and 24, exemplarily located inside the fuselage 26 of the aircraft 2. These drive units 22 and 24 are usually referred to as PCU and exemplarily comprise a first hydraulic displacement machine and a second hydraulic displacement machine for providing the ability to drive the transmission shafts 10 and 14. Two independent Slat Flap Computers (SFCC) 25 may control and monitor the system.

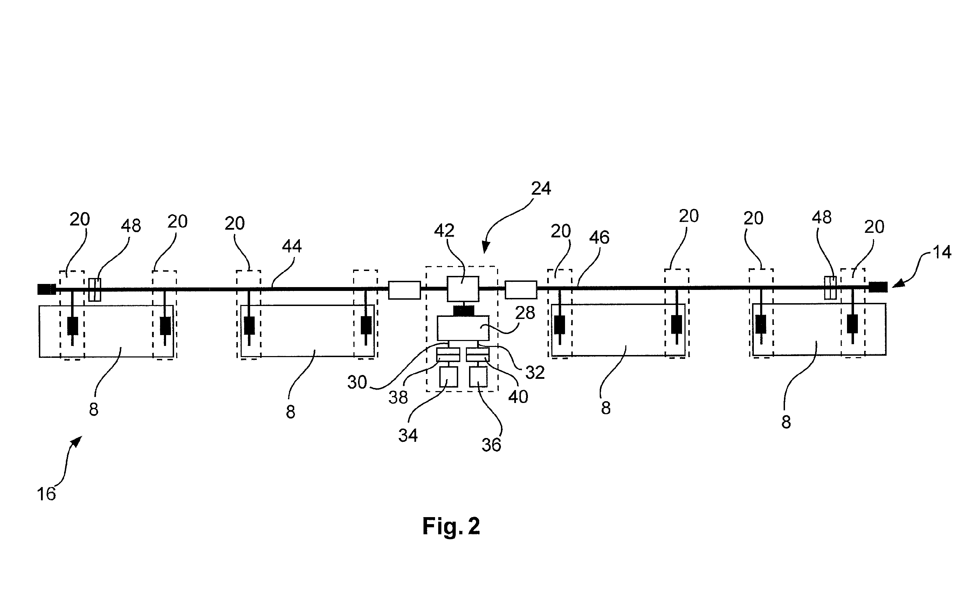

In Fig. 2, the transmission shaft 14 arranged at the trailing edge 16 is shown in a schematic view. The PCU 24 hereby comprises a differential gear unit 28 with two input shaft sections 30 and 32 as a first mechanical input and a second mechanical input to which a first hydraulic displacement machine 34 and a second hydraulic displacement machine 36 are coupled, each via one pressure-off brake 38 and 40, respectively. A pressure-off brake is activated automatically on a loss of pressure. The differential gear unit 28 may be a speed-summing differential gear that rotates a distribution gear section 42 to which two transmission shaft sections 44 and 46 are coupled.

Drive stations 20 are distributed along the transmission shaft sections 44 and are coupled to control surfaces 8. Exemplarily, two drive stations 20 are coupled to two edges of a single control surface 8 in order to drive it. Additionally, to prevent a failure in the drive system in case of a shaft break or a similar event, wing tip brakes 48 are arranged at end sections of the transmission shaft sections 44. By activating these wing tip brakes 48 the whole shaft section 44 can be arrested.

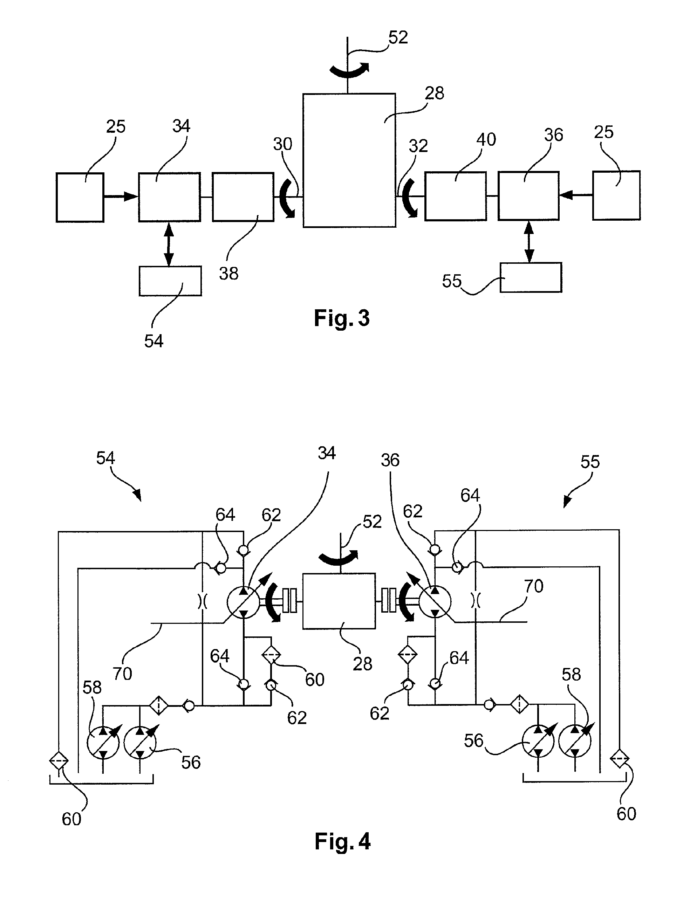

As shown in Fig. 3 the first hydraulic displacement machine 34, controlled by a slat flap control computer 25, may provide rotational power over the pressure-off brake 38 into the respective input shaft 30 of the differential gear 28. At the same time the second hydraulic displacement machine 36 provides rotational power over the power-off brake 40 into the respective input shaft 32 of the differential gear 28. This leads to the rotation of a mechanical output 52 of the differential gear 28. In case only one of the first and second hydraulic displacement machine 34, 36 supplies rotational power to the mechanical output 52, the pressure-off brake 38, 40 of the other hydraulic displacement machine 34, 36, which is in a standby state, is arrested. Thereby, the respective input shaft 30 or 32 is arrested such that the input of rotary power from the other input shaft 30 or 32 leads to the rotation of the mechanical output 52.

As the exemplary control surfaces 6 and 8 shown in Fig. 1 are high-lift control surfaces, the transmission shafts 44 and 46 shown in Fig. 2 are powered seldomly. Most of the time they are arrested, e.g. by the PCU itself in a high lift mode or by the wing tip brakes 48 in case the control surfaces are retracted or in failure cases, and are in a standby state, waiting for the next high-lift flight state. In the default high lift operating mode the wing tip brakes 48 are released and the PCU 24 is providing power for operating the high lift system with the commanded speed into any gated position.

For both hydraulic displacement machines 34 and 36 a digitally controlled over-center variable displacement motor may be used. The control of the hydraulic displacement machines 34, 36 may be established by a closed loop layout to maintain speed and torque command inputs. The control algorithms are implemented in a controller, which is provided with all required data to control the motors. For example, the controller may be integrated in an existing controller of the aircraft, such as an SFCC 25.

The hydraulic displacement machines 34 and 36 are supplied by a first hydraulic system 54 and a second hydraulic system 55. Manifolds, as part of the hydraulic displacement machines 34, 36, may be interfacing with the SFCC 25 and the hydraulic supply systems 54, 55 and may contain all components to pressurize the hydraulic displacement machines 34, 36 and to control the respective pressure-off brake 38, 40.

Both hydraulic displacement machines may preferably comprise a swash plate actuation mechanism. Each over-centre hydraulic drive may be spring loaded to provide an initial pump displacement for start up when an associated hydraulic system is not yet pressurized. The actively operated hydraulic displacement machine 34, 36 is commanded to a desired speed by the SFCC. The actively operated hydraulic displacement machine 34, 36 is now powering the other hydraulic displacement machine 34, 36 via the differential gear 28. In consequence of the initial swash displacement the other hydraulic displacement machine 34, 36 is operating in a pump mode and is pressurizing the associated hydraulic system 54, 55.

According to Fig. 4, the hydraulic displacement machines 34, 36 are coupled with the differential gear 28 and power the transmission output 52. The torque and hence the speed of the hydraulic displacement machines 34, 36, e.g. realized as an over-center variable displacement machine, is controlled by commanding the motor swash plate into the required position. The hydraulic power is provided by the associated hydraulic system 54, 55. The motor flow demand is, as part of the closed loop control algorithm, limited with the objective not to overload the hydraulic supply system 54, 55.

The associated hydraulic systems 54, 55 are preferably pressurized by engine driven pumps 58. Additionally the hydraulic system 54 is usually equipped with electric motor pumps 56 to provide the hydraulic power in case the engine driven pumps are not active, e.g. in a ground or failure case, or to increase the power of the hydraulic system in case of high flow demand. Besides that, filters 60, check valves 62 and 64 and connecting sections 66 for the integration of other hydraulic loads 68 are present for filtering hydraulic fluid and for assigning flow directions.

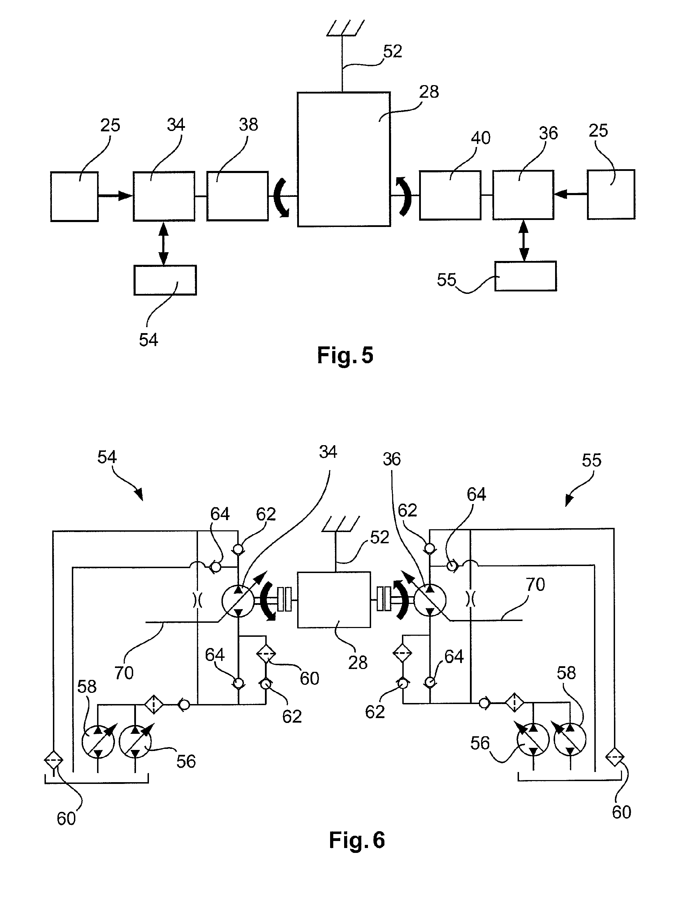

As indicated above and shown in Fig. 5, hydraulic power from hydraulic system 54 may be transferred into hydraulic system 55 by simply arresting the transmission output 52 and operating the first hydraulic displacement machine 34 in a motor mode under consumption of hydraulic power from the first hydraulic system 54 such that the second hydraulic displacement machine 36 is rotated in an opposite direction through the differential gear 28 in a pump mode for supplying hydraulic power to the second hydraulic system 55. The objective is to use a PCU of a high lift system also as a power transfer unit.

Such a PCU, equipped with e.g. digitally controlled over-center variable displacement hydraulic displacement machines 34, 36 coupled via a differential gear 28, comprises all features required for a PTU. To operate the PCU in a PTU mode the transmission output 52 of the differential gear 28 is locked by engagement of the wing tip brakes 48 as first brakes. The power-off brakes 38 and 40 as second and third brakes associated to each hydraulic displacement machine 34 and 36 are released by corresponding command inputs, e.g. by the SFCC 25. This provides power flow from the first hydraulic displacement machine 34 into the second hydraulic system 55 via the differential gear 28 and a power flow from the second hydraulic displacement machine 36 into the first hydraulic system 54. In this configuration the high lift system is safely fixed by the wing tip brakes 48. After operation of the PCU 24 as a PTU the reaction torque in the transmission is relieved by a corresponding sequence already implemented for the high lift application.

This is further depicted in Fig. 6 where the transmission output 52 is arrested and the first hydraulic displacement machine 34 is operated. Due to the rotation, the mechanically coupled second hydraulic displacement machine 36 is rotated and feeds hydraulic power into the second hydraulic system 55. By controlling the first and second hydraulic displacement machines 34, 36, e.g. through a controller interface 70 connected to the SFCC 25 or any other control logic, the pressure as well as the generated volume flow transferred into the second hydraulic system 55 is controllable.

In the above context it is pointed out that the "first" hydraulic system 54 and the "first" hydraulic displacement machine 34 may be located anywhere in the aircraft. Also, the "second" hydraulic system 55 and the "second" hydraulic displacement machine 36 may be located anywhere in the aircraft. For the sake of clarity the first displacement machine is the hydraulic displacement machine that transfers energy from the associated first hydraulic system into a second hydraulic system, while the second hydraulic systems may receive hydraulic energy through the associated second hydraulic displacement machine. In case a hydraulic system of an aircraft has excess hydraulic power while another hydraulic system in the aircraft requires a certain amount of additional power, the hydraulic system with excess power may be considered the first hydraulic system. If the situation reverses at a certain time such that the power transfer direction reverses, too, the hydraulic system that now has excess power may be considered the first hydraulic system, while the other hydraulic system may now be considered the second hydraulic system. Therefore, in an aircraft having at least two hydraulic systems and a drive system as explained above, each of the hydraulic displacement machines coupled with a differential gear unit may be a first and a second hydraulic displacement machine and each of the hydraulic systems may be a first and a second hydraulic system, temporarily, from time to time, occasionally or permanently, depending on the operation conditions of the hydraulic loads in the aircraft.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. Method for transferring hydraulic power between at least two hydraulic systems (54, 55) in an aircraft (2), the aircraft (2) having a drive system (4) comprising at least one mechanical transmission (10, 14, 44, 46) connected to a power control unit (22, 24), the power control unit (22, 24) having a first hydraulic displacement machine (34) connected to a first one of the at least two hydraulic systems (54) and a second hydraulic displacement machine (36) connected to a second one of the at least two hydraulic systems (55), the method comprising the steps of:
- connecting both hydraulic displacement machines (34, 36) to a differential gear unit (28) having a common mechanical output (52),
- arresting the mechanical output (52);
- operating the first hydraulic displacement machine (34) in a motor mode under consumption of hydraulic power from the first hydraulic system (54) such that the second hydraulic displacement machine (36) is mechanically rotated via the differential gear unit (28) in a pump mode for supplying hydraulic power to the second hydraulic system (55).

2. Method of claim 1, wherein arresting the mechanical output (52) comprises arresting at least one first brake (48) connected to the at least one mechanical transmission (10, 14, 44, 46).

3. Method of claim 2, wherein the at least one first brake (48) is at least one wing tip brake.

4. Method of any of the preceding claims, wherein operating the first hydraulic displacement machine (34) in a motor mode includes releasing a second brake (38) at the first hydraulic displacement machine (34) and a third brake (40) at the second hydraulic machine (36).

5. Method of claim 4, wherein at least one of the second brake (38) and third brake (40) is adapted to be released actively by means of a brake release unit.

6. Method of any of the preceding claims, wherein a control unit (25) controls the displacement of at least one of the first hydraulic displacement machine (34) and the second hydraulic displacement machine (36) for adjusting a resulting hydraulic pressure or flow rate.

7. Use of a PCU (22, 24) comprising a first hydraulic displacement machine (34) connected to a first hydraulic system (54) and a second hydraulic displacement machine (36) connected to a second hydraulic system (55) coupled to a differential gear unit (28) having a common mechanical output (52) for transferring hydraulic power between the first hydraulic system (54) and the second hydraulic system (55) under arresting the common mechanical output (52) and operating the first hydraulic displacement machine (34) in a motor mode under consumption of hydraulic power from the first hydraulic system (54) such that the second hydraulic displacement machine (36) is mechanically rotated via the differential gear unit (28) in a pump mode and supplies hydraulic power to the second hydraulic system (55).

8. Use of claim 7, wherein at least one wing tip brake (48) connected to a mechanical transmission (10, 14, 44, 46) mechanically connected to the mechanical output (52) of the differential gear unit (28) for arresting the mechanical transmission (10, 14, 44, 46) is used for arresting the common mechanical output (52).

9. Drive system (4) for moving at least one control surface (6, 8) of an aircraft (2) and for transferring hydraulic power between at least two hydraulic systems (54, 55) in an aircraft, comprising at least one mechanical transmission (10, 14, 44, 46) connected to a power control unit (22, 24), the power control unit (22, 24) having a first hydraulic displacement machine (34) connected to a first hydraulic system (54) and a second hydraulic displacement machine (36) connected to a second hydraulic system (55), wherein the first and second hydraulic displacement machines (34, 36) are coupled to a differential gear unit (28) having a common mechanical output (52), wherein the drive system (4) is adapted for arresting the mechanical output (52) such that by operating one the first hydraulic displacement machine (34) in a motor mode under consumption of hydraulic power from the first hydraulic system (54) the second hydraulic displacement machine (36) is mechanically rotated via the differential gear unit (28) in a pump mode and supplies hydraulic power to the second hydraulic system (55).

10. Drive system of claim 9,
further comprising at least one first brake (48) connected to the at least one mechanical transmission (10, 14, 44, 46).

11. Drive system of claim 10,
wherein the at least one first brake (48) is at least one wing tip brake.

12. Drive system of one of the claims 9 to 11,
further comprising a second brake (38) connected to the first hydraulic displacement machine (34) for arresting the first hydraulic displacement machine (34) and a third brake (40) connected to the second hydraulic displacement machine (36) for arresting the second hydraulic displacement machine (36).

13. Drive system of claim 12,
wherein at least one of the second brake (38) and the third brake (40) is a pressure-off brake.
